(19) Europäisches Patentamt
European Patent Office
Office européen des brevets

(11) EP 1 597 323 B1

(12) # EUROPÄISCHE PATENTSCHRIFT

(45) Veröffentlichungstag und Bekanntmachung des Hinweises auf die Patenterteilung:
**20.12.2006 Patentblatt 2006/51**

(21) Anmeldenummer: **04707135.2**

(22) Anmeldetag: **31.01.2004**

(51) Int Cl.:
*C09B 67/22* (2006.01) *C09B 5/62* (2006.01)

(86) Internationale Anmeldenummer:
**PCT/EP2004/000868**

(87) Internationale Veröffentlichungsnummer:
**WO 2004/074384 (02.09.2004 Gazette 2004/36)**

(54) **VERFAHREN ZUR HERSTELLUNG VON TRANSPARENTEN PIGMENTZUBEREITUNGEN AUF BASIS VON PERYLEN-3,4,9,10-TETRACARBONS UREDIIMID**

METHOD FOR PRODUCING PIGMENT TRANSPARENT PREPARATIONS BASED ON PERYLENE-3,4,9,10-TETRACARBOXYLIC ACID DIIMINE

PROCEDE DE PRODUCTION DE PREPARATIONS PIGMENTAIRES TRANSPARENTES A BASE DE DIIMIDE D'ACIDE PERYLEN-3,4,9,10-TETRACARBOXYLIQUE

(84) Benannte Vertragsstaaten:
**CH DE ES FR GB IT LI**

(30) Priorität: **21.02.2003 DE 10307557**

(43) Veröffentlichungstag der Anmeldung:
**23.11.2005 Patentblatt 2005/47**

(73) Patentinhaber: **Clariant Produkte (Deutschland) GmbH**
**65929 Frankfurt am Main (DE)**

(72) Erfinder:
- **WEBER, Joachim**
**CH-4153 Reinach (CH)**
- **OPRAVIL, Manfred**
**61184 Karben (DE)**
- **DIETZ, Erwin**
**61462 Königstein (DE)**

(56) Entgegenhaltungen:
**EP-A- 0 979 846** **EP-A- 1 130 062**
**US-A- 5 466 807**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 597 323 B1

**Beschreibung**

Gegenstand der vorliegenden Erfindung ist ein besonders umweltfreundliches und wirtschaftliches Verfahren zur Herstellung von transparenten Pigmentzubereitungen auf Basis von Perylen-3,4,9,10-tetracarbonsäurediimiden.

Bei der Pigmentierung von Automobillacken, insbesondere den Metalliclacken, werden Pigmente benötigt, die bei hoher Transparenz und reinem Farbton farbstarke und hochglänzende Lackierungen ergeben. Die Farbkonzentrate und die Lacke müssen niedrigviskos sein und dürfen keine Strukturviskosität zeigen. Außerdem werden sehr gute Echtheiten, wie beispielsweise Wetterechtheit und Überlackierechtheit, verlangt. Die Pigmente sollen sowohl in lösemittelhaltigen als auch in wässrigen Lacksystemen eingesetzt werden können.

Organische Pigmente fallen je nach Syntheseweg bei ihrer Herstellung in grobkristalliner oder feinteiliger Form an. Grobkristallin anfallende Rohpigmente müssen vor ihrer Anwendung feinverteilt werden. Solche Feinvenaitungsprozesse sind beispielsweise Roll- oder Schwingmahlungen, die nass oder trocken, mit oder ohne Mahlhilfsmittel wie beispielsweise Salz, ausgeführt werden, Knetungen, Umküpungen, Umfällungen aus beispielsweise Schwefelsäure oder Polyphosphorsäure (acid pasting) und Suspendieren in beispielsweise Schwefelsäure oder Polyphosphorsäure (acid swelling).
Sowohl die aus einer Synthese als auch die aus einer bislang bekannten Feinverteilung feinteilig anfallenden Präpigmente können im Falle des Perylen-3,4,9,10-tetracarbonsäurediimids (nachstehend Perylimid genannt) nicht direkt als Pigmente eingesetzt werden, da sie bei der Aufarbeitung und vor allem bei der Trocknung sehr stark zur Bildung von Aggregaten und Agglomeraten neigen, was zu schlechter Dispergierbarkeit führt, die beispielsweise einen Verlust an Farbstärke bewirkt. Außerdem zeigen Perylimidpigmente eine sehr starke Neigung zur Flokkulation in Lacken. Beides führt zu anwendungstechnischen Eigenschaften, die den heutigen Ansprüchen nicht mehr genügen.

Perylimid wird als organisches Marron- bis Rotviolettpigment (C.I. Pigment Violet 29, C.I.Nr. 71129) seit langem verwendet. Auch die Eignung der halogenierten Derivate als Pigmente ist bekannt. Das Rohpigment wird entweder durch Reaktion von 1,8-Naphthalindicarbonsäureimid in Alkalihydroxidschmelzen und anschließender Oxidation der gebildeten Leukoform, wie beispielsweise in EP-A-0 123 256 beschrieben, oder durch Kondensation von Perylen-3,4,9,10-tetracarbonsäure oder ihrer Anhydride oder Carbonsäuresalze (im folgenden Persäure genannt) mit Ammoniak hergestellt, wie beispielsweise in DE-A-386 057 beschrieben. Die Herstellung der halogenierten Derivate wird beispielsweise in der EP-A-0 260 648 beschrieben. Zur Überführung der so erhaltenen Perylimide in eine coloristisch brauchbare Pigmentform werden folgende Verfahren beschrieben:

Die DE-A-20 43 820 beschreibt ein Nassmahlverfahren in wässrig alkalischem Medium. Die unter den angegebenen Bedingungen erhältlichen Pigmente genügen jedoch nicht mehr den heutigen Anforderungen.

Die EP-A-1 130 062 beschreibt die Überführung von rohem Perylimid in ein Pigment durch Nassmahlung mit speziellen Perlmühlen, die durch einen hohen Energieeintrag gekennzeichnet sind. Diese Mühlen sind teuer in der Anschaffung und im Betrieb.

Es bestand das Bedürfnis, transparente Perylimid-Pigmente in einfacher, kostengünstiger und ökologisch einwandfreier Weise in einem einstufigen Verfahren herzustellen.

Es wurde gefunden, dass man transparente Perylimid-Pigmentzubereitungen mit günstigen coloristischen und rheologischen Eigenschaften in einfacher und ökologisch einwandfreier Weise aus Perylimid-Rohpigmenten durch eine wässrige Nassmahlung in einer Niedrigenergie-Rührwerkskugelmühle in Gegenwart mindestens eines Pigmentdispergators aus der Gruppe der Perylendispergatoren und der von P.V.23 abgeleiteten Dispergatoren, bei alkalischem pH und bei erhöhter Temperatur herstellen kann.

Gegenstand der vorliegenden Erfindung ist ein Verfahren zur Herstellung transparenter Perylimid-Pigmentzubereitungen auf Basis von Perylen-3,4,9,10-tetracarbonsäurediimiden der Formel (XXX)

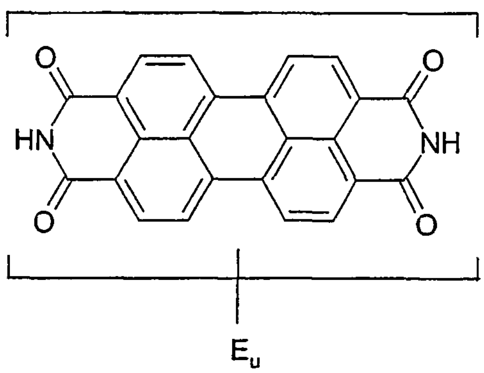

(XXX)

worin

u eine Zahl von 0 bis 8 ist, und wenn u > 0 ist,
E ein Chlor- oder Bromatom und, sofern u > 1 ist, ggf. eine Kombination davon

darstellt, dadurch gekennzeichnet, dass man ein Perylimid-Rohpigment der Formel (XXX) in einem flüssigen, wässrigen Medium, in Gegenwart mindestens eines Pigmentdispergators aus der Gruppe der Perylendispergatoren und der von P.V.23 abgeleiteten Dispergatoren, in einer Rührwerkskugelmühle, die mit einer Leistungsdichte von höchstens 1,0 kW pro Liter Mahlraum betrieben wird, unter der Einwirkung von Mahlkörpern vom Durchmesser gleich oder kleiner als 5 mm und bei einer Temperatur von mindestens 50°C nassvermahlt und die erhaltene Pigmentzubereitung isoliert.

Die erfindungsgemäßen Pigmentzubereitungen können auch Mischungen mehrerer Perylimidpigmente gemäß Formel (XXX) als Basispigment enthalten.

Das Perylimid-Rohpigment kann sowohl durch Reaktion von 1,8-Naphthalindicarbonsäureimid in Alkalihydroxidschmelzen und anschließender Oxidation der Leukoform, als auch durch Kondensation von Persäure, wie vorstehend definiert, mit Ammoniak hergestellt worden sein.

Die aus der Synthese erhältlichen grobkristallinen Perylimid-Rohpigmente oder feinkristallinen Perylimid-Präpigmente können als Pulver oder vorteilhafterweise als Suspension oder in Form eines bei der Synthese anfallenden feuchten Presskuchens ohne weitere Trocknung der Nassmahlung zugeführt werden. Es ist auch möglich, die Perylimid-Rohpigmente zu reinigen, z.B. durch eine Umkristallisation aus oder durch Ausrühren mit beispielsweise Schwefelsäure.

Die im erfindungsgemäßen Verfahren eingesetzten von P.V.23 abgeleiteten Pigmentdispergatoren sind an sich bekannt. Bevorzugt sind Verbindungen der allgemeinen Formel (I),

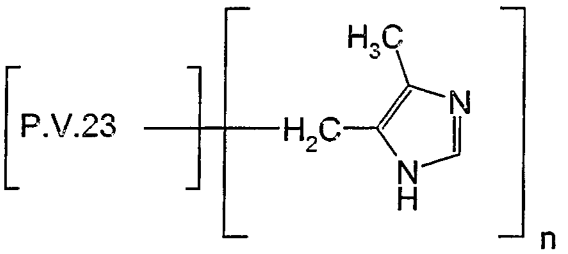

(I)

worin

n eine Zahl von 1 bis 4, vorzugsweise 1 bis 2, ist.

Die im erfindungsgemäßen Verfahren eingesetzten Perylendispergatoren sind an sich bekannt. Bevorzugt sind Verbindungen der allgemeinen Formel (II),

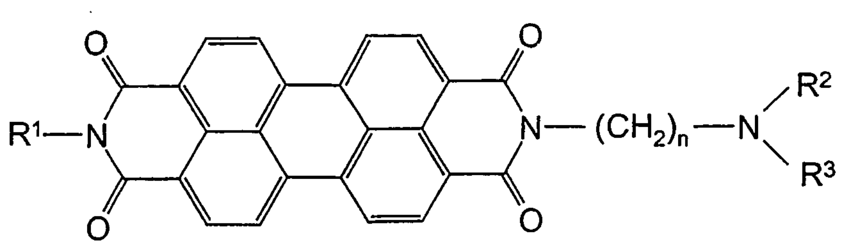

(II)

in welcher

$R^1$ ein Wasserstoffatom, eine Hydroxy- oder Aminogruppe oder eine $C_1$-$C_8$-Alkylgruppe, die durch 1 bis 4 Chlor- oder Bromatome, eine Phenyl-, Cyan-, Hydroxy-, Carbamoyl-, $C_2$-$C_4$-Acyl- oder $C_1$-$C_4$-Alkoxygruppe substituiert sein kann oder perfluoriert oder teilfluoriert ist;
$R^2$ und $R^3$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können;
oder $R^2$ und $R^3$ zusammen mit dem N-Atom einen 5- bis 7-gliedrigen gesättigten, ungesättigten oder aromatischen heterocyclischen Ring bilden, der gegebenenfalls ein weiteres Stickstoff-, Sauerstoff- oder Schwefelatom im Ring enthält; und

n eine Zahl von 1 bis 6 ist;

oder der allgemeinen Formel (III),

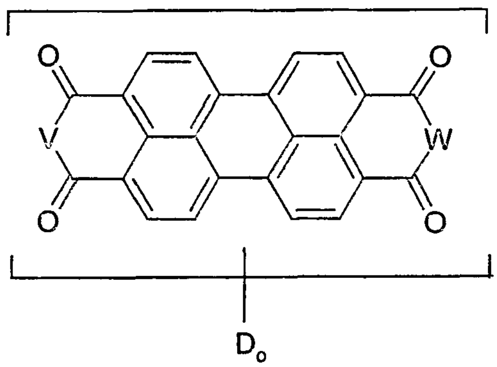

(III)

in welcher

- V einen bivalenten Rest -O-, >$NR^4$ oder >$NR^5$-$Y^-$ $X^+$,
- W den bivalenten Rest >$NR^5$-$Y^-$ $X^+$ bedeutet,
- o eine Zahl von 0 bis 8, bevorzugt 0 bis 4, ist, und wenn o > 0 ist,
- D ein Chlor- oder Bromatom und, sofern o > 1 ist, ggf. eine Kombination davon darstellt,
- $R^4$ für ein Wasserstoffatom oder eine $C_1$-$C_{18}$-Alkylgruppe, insbesondere $C_1$-$C_4$-Alkyl, oder für eine Phenylgruppe steht, die unsubstituiert oder durch Halogen wie Chlor oder Brom, $C_1$-$C_4$-Alkyl, wie Methyl oder Ethyl, $C_1$-$C_4$-Alkoxy, wie Methoxy oder Ethoxy, oder Phenylazo, ein- oder mehrfach, bevorzugt 1-, 2- oder 3- fach, substituiert sein kann,
- $R^5$ für eine $C_1$-$C_{18}$-Alkylengruppe steht, die innerhalb der C-C-Kette durch ein Brückenglied aus der Reihe -O-, -$NR^6$-, -S-, Phenylen, -CO-, -$SO_2$- oder -$CR^7R^8$- oder eine chemisch sinnvolle Kombination davon ein- oder mehrfach unterbrochen sein kann und in dem die Reste $R^6$, $R^7$ und $R^8$ unabhängig voneinander jeweils ein Wasserstoffatom oder eine $C_1$-$C_4$-Alkylgruppe sind, die unsubstituiert oder durch einen heterocyclischen Rest, vorzugsweise vom Imidazol- oder Piperazin-Typ, substituiert sein kann, insbesondere eine geradkettige oder verzweigte $C_1$-$C_6$-Alkylengruppe wie Ethylen oder Propylen ist;
  oder $R^5$ für eine Phenylengruppe steht, die unsubstituiert oder durch $C_1$-$C_4$-Alkyl, wie Methyl oder Ethyl, oder $C_1$-$C_4$-Alkoxy, wie Methoxy oder Ethoxy, ein- oder mehrfach, bevorzugt 1-, 2- oder 3- fach, substituiert sein kann,
- $Y^-$ einen der anionischen Reste -$SO_3^-$ oder -$COO^-$ bedeutet, und
- $X^+$ die Bedeutung $H^+$ oder das Äquivalent

$$\frac{M^{m+}}{m}$$

eines Metallkations aus der 1, bis 5. Hauptgruppe oder aus der 1. oder 2. oder der 4. bis 8, Nebengruppe des Periodensystems der chemischen Elemente hat, wobei m eine der Zahlen 1, 2 oder 3 ist, und $M^{m+}$ z.B. $Li^{1+}$, $Na^{1+}$, $K^{1+}$, $Mg^{2+}$, $Ca^{2+}$, $Sr^{2+}$, $Ba^{2+}$, $Mn^{2+}$, $Cu^{2+}$, $Ni^{2+}$, $Co^{2+}$, $Zn^{2+}$, $Fe^{2+}$, $Al^{3+}$, $Cr^{3+}$ oder $Fe^{3+}$;
oder ein Ammoniumion N+R9R10RiiRi2 definiert, wobei die Substituenten $R^9$, $R^{10}$, $R^{11}$ und $R^{12}$ unabhängig voneinander jeweils ein Wasserstoffatom oder eine Gruppe aus der Reihe $C_1$-$C_{30}$-Alkyl, $C_2$-$C_{30}$-Alkenyl, $C_5$-$C_{30}$-Cycloalkyl, unsubstituiertes oder durch $C_1$-$C_8$-alkyliertes Phenyl, ($C_1$-$C_4$)-Alkylen-phenyl, vorzugsweise Benzyl, oder eine (Poly)alkylenoxygruppe

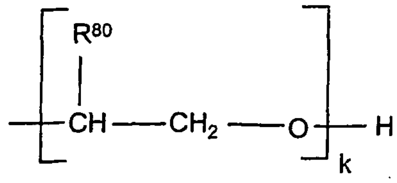

sind,
in der k eine Zahl von 1 bis 30 ist,
$R^{80}$ und für Wasserstoff, $C_1$-$C_4$-Alkyl oder, sofern k > 1 ist, eine Kombination davon steht;
und worin als $R^9$, $R^{10}$, $R^{11}$ und $R^{12}$ ausgewiesenes Alkyl, Alkenyl, Cycloalkyl, Phenyl oder Alkylphenyl durch Amino, Hydroxy und/oder Carboxy substituiert sein können;
oder wobei die Substituenten $R^9$ und $R^{10}$ zusammen mit dem quartären N-Atom ein fünf- bis siebengliedriges gesättigtes Ringsystem, das ggf. noch weitere Heteroatome aus der Gruppe O, S und N enthält, bilden können, z.B. ein Pyrrolidon, Imidazolidin, Hexamethylenimin, Piperidin, Piperazin oder Morpholin;
oder wobei die Substituenten $R^9$, $R^{10}$ und $R^{11}$ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können, z.B. ein Pyrrol, Imidazol, Pyridin, Picolin, Pyrazin, Chinolin oder Isochinolin;

oder der allgemeinen Formel (IV),

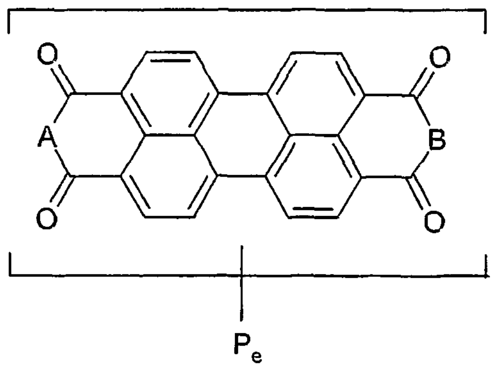

(IV)

in welcher

A einen kationischen bivalenten Rest der Formel $N$-$R^{13}$-$NH^+R^{14}R^{15}$
B einen anionischen bivalenten Rest der Formel

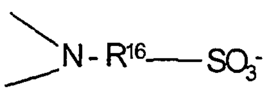

oder

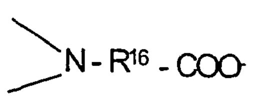

bedeutet,

| | |
|---|---|
| e | eine Zahl von 0 bis 8, vorzugsweise 1 bis 6, ist, und wenn e > 0 ist, |
| P | ein Chlor- oder Bromatom und, sofern e > 1 ist, ggf. eine Kombination davon darstellt, |
| $R^{13}$ | für eine $C_1$-$C_{12}$-Alkylengruppe, vorzugsweise eine $C_2$-$C_6$-Alkylengruppe, eine ($C_6$-$C_{10}$)Aryl-($C_1$-$C_6$)-alkylengruppe oder eine ($C_6$-$C_{10}$)-Arylengruppe steht, vorzugsweise Phenylen, |
| $R^{14}$ und $R^{15}$ | gleich oder verschieden sind und ein Wasserstoffatom, $C_1$-$C_{20}$-Alkyl, vorzugsweise $C_1$-$C_6$-Alkyl, oder |

$C_2$-$C_{20}$-Alkenyl bedeuten, oder

$R^{14}$ und $R^{15}$ zusammen mit dem angrenzenden N-Atom ein heterocyclisches Ringsystem bilden, das ggf. noch weitere ringangehörige Heteroatome N, S und/oder O enthält und an das ggf. zusätzliche Ringe ankondensiert sind, und

$R^{16}$ eine geradkettige oder verzweigte $C_1$-$C_{12}$-Alkylengruppe, vorzugsweise $C_1$-$C_6$-Alkylengruppe, darstellt;

oder der allgemeinen Formel (V),

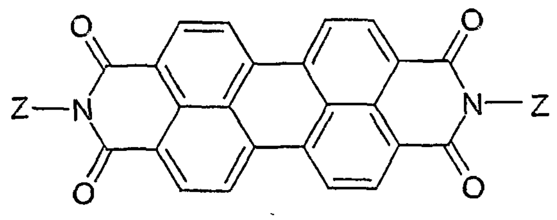

(V)

in welcher die beiden Reste Z gleich oder verschieden sind und Z die Bedeutung $Z^1$, $Z^3$ oder $Z^4$ hat, mit der Maßgabe, dass beide Reste Z nicht gleichzeitig $Z^4$ sind, wobei

$Z^1$ ein Rest der Formel (Va) ist,

$$-[X-Y]_q-[X^1-Y^1]_r-[X^2-NH]_sH \qquad \text{(Va)}$$

worin

X, $X^1$ und $X^2$ gleich oder verschieden sind und einen verzweigten oder unverzweigten $C_2$-$C_6$-Alkylenrest oder einen $C_5$-$C_7$-Cycloalkylenrest bedeuten, der durch 1 bis 4 $C_1$-$C_4$-Alkylreste, Hydroxyreste, Hydroxyalkylreste mit 1 bis 4 Kohlenstoffatomen und/oder durch 1 bis 2 weitere $C_5$-$C_7$-Cycloalkylreste substituiert sein kann;

Y und $Y^1$ gleich oder verschieden sind und eine NH-, -O-, N($C_1$-$C_6$-alkyl)-Gruppe, vorzugsweise $-NCH_3$, oder

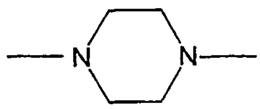

bedeuten;

q eine Zahl von 1 bis 6, vorzugsweise 1, 2, 3 oder 4;

r und s unabhängig voneinander eine Zahl von 0 bis 6, vorzugsweise 0, 1 oder 2, wobei r und s vorzugsweise nicht gleichzeitig Null sind;

$Z^3$ ein Rest der Formel (Vc) ist,

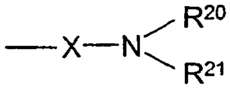

(Vc)

worin

$R^{20}$ und $R^{21}$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte,

oder teil- oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können,oder

$R^{20}$ und $R^{21}$ zusammen mit dem N-Atom einen gesättigten, ungesättigten oder aromatischen heterocyclischen 5- bis 7-gliedrigen Ring bilden, der gegebenenfalls ein weiteres Stickstoff-, Sauerstoff- oder Schwefelatom im Ring enthält; und

X die oben genannte Bedeutung hat;

und worin

$Z^4$ Wasserstoff, Hydroxy, Amino, Phenyl oder $C_1$-$C_{20}$-Alkyl ist, wobei der Phenylring und die Alkylgruppe durch ein oder mehrere, vorzugsweise 1, 2, 3 oder 4, Substituenten aus der Gruppe Cl, Br, CN, OH, $C_6H_5$, Carbamoyl, $C_2$-$C_4$-Acyl und $C_1$-$C_4$-Alkoxy substituiert sein können, der Phenylring auch durch $NR^{20}R^{21}$ substituiert sein kann, wobei $R^{20}$ und $R^{21}$ die oben genannte Bedeutung haben, oder die Alkylgruppe perfluoriert oder teilfluoriert ist.

Je nach Auswahl der Reste Z können symmetrische oder asymmetrische Perylendispergatoren eingesetzt werden, wobei asymmetrische Perylendispergatoren auch solche sind, die unterschiedliche Reste $Z^1$ oder $Z^3$ haben.

Von Interesse sind beispielsweise Perylendispergatoren der Formel (V), worin X, $X^1$ und $X^2$ ein $C_2$-$C_4$-Alkylenrest oder Cyclohexylen bedeuten. Von besonderem Interesse sind beispielsweise Perylendispergatoren der Formel (V), worin $Z^1$ eine der folgenden Bedeutungen hat: $-[(CH_2)_3-NH]_2-H$, $-(CH_2-CH_2-NH)_2H$, $-(CH_2)_3-NH-(CH_2)_2-NH-(CH_2)_3-NH_2$,

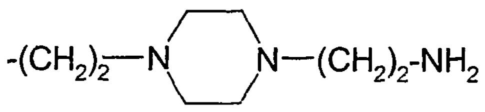

,

$-(CH_2)_3-N(CH_3)-(CH_2)_3-NH_2$, $-(CH_2)_3-O-(CH_2)_2-O-(CH_2)_3-NH_2$, $-(CH_2)_3-O-(CH_2)_3-O-(CH_2)_3-NH_2$, $-(CH_2)_2-NH-(CH_2)_3-NH_2$, $-(CH_2)_3-NH-(CH_2)_2-NH_2$, $-(CH_2-CH_2-NH)_3-H$, $-(CH_2-CH_2-NH)_4-H$, $-(CH_2-CH_2-NH)_5-H$, $-(CH_2)_3-O-(CH_2)_2-O-(CH_2)_2-O-(CH_2)_3-NH_2$, $-(CH_2)_3-O-(CH_2)_4-O-(CH_2)_3-NH_2$,

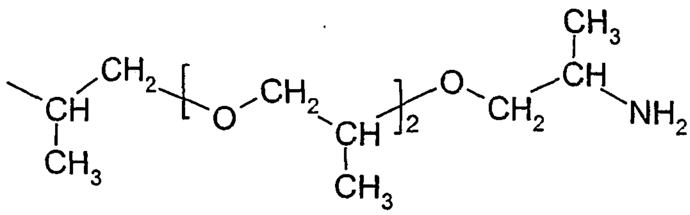

,

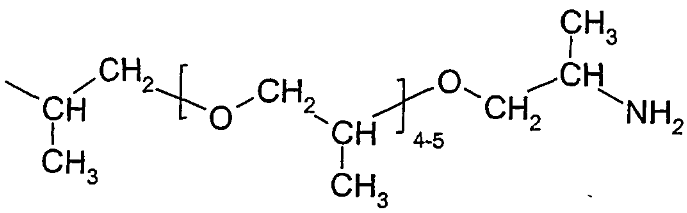

,

$-(CH_2)_2-OH$, $-(CH_2)_3-OH$, $-CH_2-CH(CH_3)-OH$, $-CH(CH_2-CH_3)CH_2-OH$,- $CH(CH_2OH)_2$, $-(CH_2)_2-O-(CH_2)_2-OH$, $-(CH_2)_3-O-(CH_2)_2-O-(CH_2)_2-OH$.

Vorzugsweise bedeuten die Reste $R^{20}$ und $R^{21}$ Wasserstoff, $C_1$-$C_6$-Alkyl, durch 1 bis 2 Substituenten aus der Gruppe Hydroxy, Acetyl, Methoxy, Ethoxy, Chlor und Brom substituiertes $C_1$-$C_6$-Alkyl; oder $R^{20}$ und $R^{21}$ bilden zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring.

Vorzugsweise bedeutet $Z^3$ $-(CH_2)_2-NH_2$, $-(CH_2)_3-NH_2$, $-CH_2-CH(CH_3)-NH_2$, $-H_2$ $-C(CH_3)_2-CH_2-NH_2$,

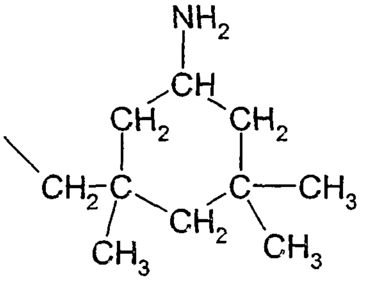 , 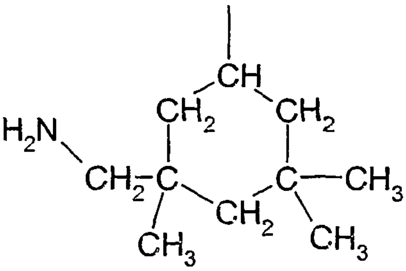 ,

$-(CH_2)_2-NH-CH_3$, $-(CH_2)_2-N(CH_3)_2$, $-(CH_2)_2-NH-CH_2-CH_3$, $-(CH_2)_2-N(CH_2-CH_3)_2$, $-(CH_2)_3-NH-CH_3$, $-(CH_2)_3-N(CH_3)_2$, $-(CH_2)_3-NH-CH_2-CH_3$ oder $-(CH_2)_3-N(CH_2-CH_3)_2-$.

Vorzugsweise bedeutet $Z^4$ Wasserstoff, Amino, Phenyl, Benzyl, mit $NR^{20}R^{21}$ substituiertes Phenyl oder Benzyl, $C_1$-$C_6$-Alkyl oder ein durch 1 bis 2 Substituenten aus der Gruppe Hydroxy, Acetyl, Methoxy und Ethoxy substituiertes $C_2$-$C_6$-Alkyl, besonders bevorzugt Wasserstoff,

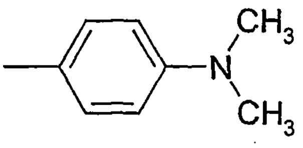 , 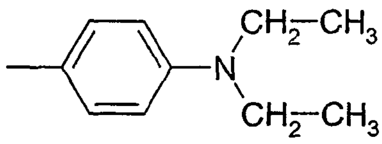 ,

Methyl, Ethyl, Propyl, Butyl, Benzyl, Hydroxyethyl, Hydroxypropyl oder Methoxypropyl.

Besonders bevorzugt sind Pigmentdispergatoren der Formel (II), worin

| | |
|---|---|
| $R^1$ | ein Wasserstoffatom, Benzyl, eine $C_1$-$C_6$-Alkylgruppe oder eine durch 1 bis 2 Substituenten aus der Gruppe Hydroxy, Acetyl, Methoxy, Ethoxy, Chlor und Brom substituierte $C_2$-$C_6$-Alkylgruppe; |
| $R^2$ und $R^3$ | unabhängig voneinander ein Wasserstoffatom, eine $C_1$-$C_6$-Alkylgruppe, eine durch 1 bis 2 Substituenten aus der Gruppe Hydroxy, Acetyl, Methoxy, Ethoxy, Chlor und Brom substituierte $C_1$-$C_6$-Alkylgruppe, oder $R^2$ und $R^3$ zusammen mit dem angrenzenden N-Atom einen Imidazolyl-, Piperidinyl-, Morpholinyl-, Pipecolinyl-, Pyrrolyl-, Pyrrolidinyl-, Pyrazolyl- oder Piperazinyl-Ring bilden, und |
| n | die Zahl 2 oder 3 ist. |

Von besonderem Interesse sind Pigmentdispergatoren der Formel (II), in welcher $R^1$ Wasserstoff, Hydroxyethylen, Methyl oder Ethyl, $R^2$ und $R^3$ jeweils Methyl oder Ethyl darstellen und n die Zahl 3 ist, oder worin $R^2$ und $R^3$ zusammen mit dem angrenzenden Stickstoffatom einen Imidazolylrest oder Morpholinylrest bilden und n die Zahl 3 ist.

Besonders bevorzugt sind weiterhin Pigmentdispergatoren der Formel (IV), worin

| | |
|---|---|
| e | die Zahl 0 ist, |
| $R^{13}$ | eine Ethylen- oder Propylengruppe ist, |
| $R^{14}$ und $R^{15}$ | verschieden oder vorzugsweise gleich sind und einen Ethyl-, Propyl- oder Butylrest bedeuten, oder |
| $R^{14}$ und $R^{15}$ | zusammen mit dem angrenzenden N-Atom einen heterocyclischen aliphatischen Fünf- oder Sechsring mit 1 oder 2 weiteren ringangehörigen Heteroatomen N, S und/oder O bilden, wie z.B. vom Pyrrolidin-, Piperazin- und insbesondere Piperidin- oder Morpholintyp, oder |
| $R^{14}$ und $R^{15}$ | in analoger Weise zusammen mit dem angrenzenden N-Atom einen heterocyclischen aromatischen Fünf- oder Sechsring bilden, wie z.B. vom Pyrrol-, Imidazolin- und besonders Imidazol-Typ, |

wobei der Ring auch einen benzokondensierten Ring aufweisen kann, wie z.B. vom Indol-, Indolin- oder Benzimidazol-Typ, und das Ringsystem durch Methyl, Ethyl oder Chlor substituiert sein kann, und

$R^{16}$ eine Ethylen- oder Propylengruppe ist.

Die Gesamtmenge an eingesetzten Pigmentdispergatoren beträgt 0,1 bis 25 Gew.-%, vorzugsweise 0,5 bis

20 Gew.-%, insbesondere 1 bis 15 Gew.-%, bezogen auf das Rohpigment.

Die erfindungsgemäße Herstellung transparenter Perylimid-Pigmentzubereitungen gelingt überraschenderweise ohne eine vorherige Trockenmahlung. Für die Durchführung der erfindungsgemäßen Nassmahlung sind konventionelle Rührwerkskugelmühlen geeignet, die zum diskontinuierlichen und kontinuierlichen Arbeitsablauf ausgelegt sind, mit zylinderförmigem oder hohlzylinderförmigem Mahlraum in horizontaler oder vertikaler Bauweise, und die mit einer spezifischen Leistungsdichte von höchstens 1,0 kW pro Liter Mahlraum, bevorzugt zwischen 0,1 und 1,0 kW pro Liter Mahlraum, betrieben werden können, wobei deren Rührwerksumfangsgeschwindigkeit zweckmäßigerweise höchstens 12 m/s, bevorzugt 2 bis 12 m/s, insbesondere 5 bis 11 m/s, beträgt. Durch die bauliche Ausführung wird sichergestellt, dass eine ausreichende Mahlenergie auf das Mahlgut übertragen wird. Die pro Zeiteinheit vom Rührwerk abgegebene Energie wird als Zerkleinerungsarbeit und als Reibungsenergie in Form von Wärme auf das Mahlgut übertragen. Zur Abführung der Wärmemenge kann die Mühle gekühlt sein. Bei hohen Durchsätzen wird im Kreislauf gemahlen, und die Wärme kann überwiegend über das Mahlgut nach außen abgeführt werden. Als Mahlkörper dienen Kugeln aus beispielsweise Stahl, Porzellan, Steatit, Oxiden wie beispielsweise Aluminiumoxid oder Zirkonoxid, Mischoxiden wie beispielsweise Zirkonmischoxid, oder Glas wie beispielsweise Quarzglas vom Durchmesser gleich oder kleiner als 5 mm; zweckmäßig werden solche mit einem Durchmesser von 0,2 bis 5 mm, vorzugsweise 0,3 bis 3 mm, insbesondere 0,5 bis 2 mm oder 1,0 bis 2 mm verwendet.

Beim Einsatz von kontinuierlichen Rührwerkskugelmühlen zum Feinverteilen erfolgt die Abtrennung der Mahlkörper vom Mahlgut vorzugsweise durch Zentrifugalabscheidung, so dass die Trennvorrichtungen von den Mahlkörpern praktisch nicht berührt werden, wodurch man Verstopfungen derselben weitgehend verhindern kann.

Die Mahlung wird in einem flüssigen, wässrigen Medium, ggf. unter Zusatz von geringen Mengen von bis zu 10 Gew.-% organischen Lösemitteln bezogen auf das Wasser, durchgeführt.

Als das gegebenenfalls in geringen Mengen zugesetzte organische Lösemittel kommen $C_1$-$C_8$-Alkanole, vorteilhaft mit Wasser mischbare Alkanole, wie z.B. Methanol, Ethanol, n-Propanol, Isopropanol, n-Butanol, tert.-Butanol, Isobutanol, Pentanol, Hexanol, Alkylhexanole, Ethylenglykol, Propylenglykol oder Glycerin; cyclische Alkanole wie z.B. Cyclohexanol; $C_1$-$C_5$-Dialkylketone wie z.B. Aceton, Diethylketon, Methylisobutylketon oder Methylethylketon; Ether und Glykolether wie z.B. Dimethoxyethan, Tetrahydrofuran, Methylglykol, Ethylglykol, Butylglykol, Ethyldiglykol, Methoxypropanol oder Methoxybutanol; aliphatische Säureamide wie z.B. Dimethylacetamid oder Dimethylformamid; cyclische Carbonsäureamide wie z.B. N-Methylpyrrolidon, Valero- und Caprolactam, heterocyclische Basen wie z.B. Pyridin, Morpholin oder Picolin; sowie Dimethylsulfoxid oder Mischungen dieser Lösungsmittel in Betracht. Bevorzugt sind $C_1$-$C_6$-Alkohole, besonders bevorzugt wird jedoch ohne Zusatz von organischem Lösemittel gearbeitet.

Die Pigmentkonzentration im Mahlgut ist abhängig von der Rheologie der Suspension. Sie sollte unter 40 Gew.-% liegen, im allgemeinen 2,5 bis 30 Gew.-% betragen, vorzugsweise zwischen 5 und 20 Gew.-% sein.

Vorteilhaft ist ein pH größer gleich 9,0, bevorzugt größer gleich 10. Gewöhnlich wird bei einem pH größer gleich 11,0 gearbeitet.

Die Mahldauer ist abhängig von den Feinheitsanforderungen für das jeweilige Anwendungsgebiet. Deshalb liegt die Verweilzeit des Mahlguts in der Rührwerkskugelmühle je nach geforderter Feinheit im allgemeinen zwischen 10 Minuten und 5 Stunden. Sie beläuft sich normalerweise auf eine Dauer von 15 Minuten bis 2 Stunden, vorzugsweise 15 Minuten bis 1 Stunde.

Die Mahlung wird bei Temperaturen im Bereich von 50 bis 100°C, zweckmäßig bei einer Temperatur zwischen 60 und 95°C, vorzugsweise bei 70 bis 90°C durchgeführt.

Das Mahlgut kann außer der flüssigen Phase und dem Rohpigment noch Hilfsmittel, wie z.B. Tenside, andere Pigmentdispergatoren, Füllstoffe, Stellmittel, Harze, Entschäumer, Antistaubmittel, Extender, Farbmittel zum Nuancieren, Konservierungsmittel, Trocknungsverzögerungsmittel, Additive zur Steuerung der Rheologie oder eine Kombination davon enthalten.

Die Zugabe der vorstehend genannten Hilfsmittel kann in einem oder mehreren beliebigen Zeitpunkten im Verlauf des gesamten Pigmentherstellungsprozesses erfolgen, vorzugsweise vor der Kondensation oder vor der Nassmahlung, aber auch während der Kondensation, während der Nassmahlung, vor oder während der Isolierung, vor oder während der Trocknung oder zur trockenen Pigmentzubereitung (Pulver oder Granulat), auf einmal oder in mehreren Portionen. Die Gesamtmenge der zugegebenen Hilfsmittel kann 0 bis 40 Gew.-%, bevorzugt 1 bis 25 Gew.-%, besonders bevorzugt 5 bis 15 Gew.-%, bezogen auf das Rohpigment, betragen.

Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Destillation des Ammoniaks und bei der Nassmahlung nicht schäumen.

Als anionaktive Substanzen kommen beispielsweise Fettsäuretauride, FettsäureN-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, z.B. Palmitin-, Stearin- und Ölsäure; Seifen, z.B. Alkalisalze von Fettsäuren, Naphthensäuren und Harzsäuren, z.B.

Abietinsäure, alkalilösliche Harze, z.B. kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.

Als kationaktive Substanzen kommen beispielsweise quaternäre Ammoniumsalze, Fettaminoxalkylate, oxalkylierte Polyamine, Fettaminopolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen in Betracht.

Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von Fettalkoholen oder Fettalkoholpolyglykolethern, Fettsäureamidethoxylate, Fettalkohol-alkylenoxid-Addukte und Alkylphenolpolyglykolether in Betracht.

Mit Füllstoffen bzw. Extendern sind eine Vielzahl von Substanzen gemäß DIN 55943 und DIN EN 971-1 gemeint, beispielsweise die verschiedenen Typen von Talk, Kaolin, Glimmer, Dolomit, Kalk, Bariumsulfat oder Titandioxid. Vorzugsweise wird die Pigmentzubereitung direkt nach der Nassmahlung isoliert. Es ist aber möglich, eine Nachbehandlung (Finish) mit Wasser und/oder einem wie vorstehend beschriebenen, organischen Lösemittel, durchzuführen, beispielsweise bei Temperaturen von 20 bis 180°C.
Es ist auch möglich, die nach der Mahlung vorliegenden Pigmentsuspensionen einzudampfen oder sprühzutrocknen, so dass eine Filtration entfallen kann.

Die Herstellung der Perylimid-Pigmentzubereitungen nach dem erfindungsgemäßen Verfahren erfolgt im wesentlichen ohne Abfallprodukte. Die wenigen Chemikalien können weiterverarbeitet oder wieder vollständig regeneriert werden.

Es war überraschend und nicht vorhersehbar, dass die Herstellung von transparenten Perylimid-Pigmentzubereitungen in dieser einfachen und technisch eleganten Weise ohne ökologische Probleme möglich ist, da nach den bekannten Verfahren, insbesondere nach der Lehre von EP-A-1 130 062, die Herstellung von transparenten Perylimid-Pigmenten nur durch Einsatz von in der Anschaffung und im Betrieb teuren Hochenergie-Rührwerkskugelmühlen gelingt.
Nach dem erfindungsgemäßen Verfahren hergestellte Perylimid-Pigmentzubereitungen sind in ihren coloristischen und anwendungstechnischen Eigenschaften den nach bekannten Verfahren hergestellten Pigmenten überlegen.

Mit den nach dem erfindungsgemäßen Verfahren hergestellten Perylimid-Pigmentzubereitungen können Automobillacke, insbesondere Metalliclacke mit hoher Pigmentkonzentration hergestellt werden. Sie eignen sich zum Einsatz sowohl in lösemittelhaltigen als auch in wässrigen Lacksystemen. Es werden farbstarke, transparente und glänzende Lackierungen mit sehr guter Überlackierechtheit und Wetterechtheit erhalten. Die Farbkonzentrate (mill bases) und die Lacke besitzen außerdem sehr gutes Fließverhalten bei hoher Pigmentkonzentration und eine hervorragende Flokkungsstabilität.

Erfindungsgemäß hergestellte Perylimid-Pigmentzubereitungen eignen sich zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.
Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäß hergestellten Pigmentzubereitungen in einer Menge von vorzugsweise 0,05 bis 30 Gew.-%, vorzugsweise 0,1 bis 15 Gew.-% ein.
Mit den nach dem erfindungsgemäßen Verfahren hergestellten Pigmentzubereitungen können die technisch gängigen Einbrennlacke aus der Klasse der Alkyd-Melamin-Harzlacke, Acryl-Melamin-Harzlacke, Polyesterlacke, Highsolidacrylharzlacke, wässrige Lacke auf Polyurethanbasis sowie Zweikomponentenlacke auf Basis polyisocyanatvernetzbarer Acrylharze und insbesondere Automobil-Metallic-Lacke pigmentiert werden.

Die erfindungsgemäß hergestellten Pigmentzubereitungen sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmentzubereitungen geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmentzubereitungen als Farbmittel in Tinten, vorzugsweise Ink-Jet Tinten auf wässriger und nichtwässriger Basis, Mikroemulsionstinten sowie in solchen Tinten, die nach dem hot-melt-Verfahren arbeiten, geeignet.

Darüber hinaus sind die erfindungsgemäß hergestellten Pigmentzubereitungen auch als Farbmittel für Farbfilter, sowohl für die subtraktive als auch für die additive Farberzeugung, sowie als Farbmittel für elektronische Tinten ("electronic inks" bzw. "e-inks") oder "electronic paper" ("e-paper") geeignet.

Zur Beurteilung der Eigenschaften der nach der Erfindung hergestellten Pigmentzubereitungen auf dem Lacksektor wurden aus der Vielzahl der bekannten Lacke ein High-Solid-Acrylharzeinbrennlack auf Basis einer nichtwässrigen Dispersion (HS) ausgewählt.
Die Bestimmung der Farbstärke und des Farbtons erfolgte nach DIN 55986.
Die Rheologie des Mahlguts nach der Dispergierung (mill base-Rheologie) wurde anhand der folgenden fünfstufigen Skala bewertet:

5 dünnflüssig
4 flüssig
3 dickflüssig
2 leicht gestockt
1 gestockt

Nach dem Verdünnen des Mahlguts auf die Pigmentendkonzentration wurde die Viskosität mit dem Viskospatel nach Rossmann, Typ 301 der Firma Erichsen beurteilt.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

In den nachstehenden Beispielen beziehen sich Teile jeweils auf Gewichtsteile und Prozente jeweils auf Gewichtsprozente der so beschriebenen Substanzen.

Beispiel 1

1100 Teile Glasperlen von Durchmesser 1 mm als Mahlkörper, 300 Teile Wasser und 0,6 Teile Natriumhydroxid, durch die ein pH von 12,3 sich einstellt, werden in einem 1 Liter Mahltopf einer Rührwerkskugelmühle auf 80°C erwärmt. Dann werden 32 Teile Rohperylimid, hergestellt aus der Alkalihydroxidschmelze von 1,8-Naphthalindicarbonsäureimid, und 8,2 Teile Presskuchen 29,1 %ig Pigmentdispergator (P.V. 23 - 5-hydroxymethyl-4-methylimidazolyl), hergestellt gemäß EP-A-0 321 919 Beispiel 17, eingetragen und 30 Minuten lang mit einer Umfangsgeschwindigkeit von 10,2 m/s und einer Leistungsdichte von 0,45 kW/l Mahlraum bei 80°C gemahlen. In dieser Zeit werden 50 Teile Wasser nachgesetzt, damit die Suspension rührbar bleibt. Dann werden die Mahlkörper durch Sieben vom Mahlgut abgetrennt, die Suspension wird filtriert, der Presskuchen mit Wasser gewaschen und getrocknet.
Man erhält 28 Teile Pigmentzubereitung.

Beispiel 2 (Vergleichsbeispiel)

Gemäß EP-A-1 130 062, Beispiel 3, wird eine Pigmentzubereitung hergestellt mit dem einzigen Unterschied, dass bei 80°C gemahlen wird.

Ausprüfungen

Die nach Beispiel 1 hergestellte Pigmentzubereitung ist im HS-Lack sehr farbstark, die Metalliclackierung ist farbstark und brillant. Die Rheologie des Mahlguts nach der Dispergierung wird mit 5 bewertet und das Mahlgut zeigt keine Strukturviskosität. Die Viskosität des Lackes beträgt 1,6 sec.

Die nach Beispiel 2 hergestellte Pigmentzubereitung zeigt eine schlechtere Rheologie des Mahlguts, sie wird nur mit 4 bewertet und zeigt eine unerwünschte Thixotropie. Die Viskosität des Lacks ist stark erhöht und beträgt 4,6

sec. Die Lackierung ist sehr matt, die Glanzmessung des gegossenen Lacks ergibt einen Wert von 21 statt 76 im Falle von Beispiel 1.

Die nach Beispiel 1 hergestellte Pigmentzubereitung ist im HS-Lack im Vergleich zu einem handelsüblichen P.V.29 Pigment transparenter und bedeutend farbstärker, die Metalliclackierung ist auch wesentlich farbstärker.

Beispiel 3

Beispiel 1 wurde durchgeführt mit dem einzigen Unterschiede, dass an Stelle der 8,2 Teile Presskuchen des von P.V.23 abgeleiteten Pigmentdispergators 1,6 Teile eines Pigmentdispergators der Formel (III), in der V einen bivalenten Rest >$NR^4$, $R^4$ Methyl, W einen bivalenten Rest >$NR^5Y^-X^+$, $R^5$ Ethylen und $Y^-X^+$ den Rest -$SO_3H$ bedeuten, hergestellt gemäß EP-A-486 531 Beispiel 3, eingesetzt werden.

Beispiel 4

Beispiel 1 wurde durchgeführt mit dem einzigen Unterschiede, dass an Stelle der 8,2 Teile Presskuchen des von P.V.23 abgeleiteten Pigmentdispergators 0,8 Teile eines Pigmentdispergators der Formel (III), in der V und W einen bivalenten Rest >$NR^5Y^-X^+$ mit $R^5$ Ethylen und $Y^-X^+$ den Rest -COOH bedeuten, hergestellt gemäß US-A- G413309 Beispiel 32a, und 5,6 Teile Presskuchen 28,5 %ig eines Pigmentdispergators der Formel (Va)

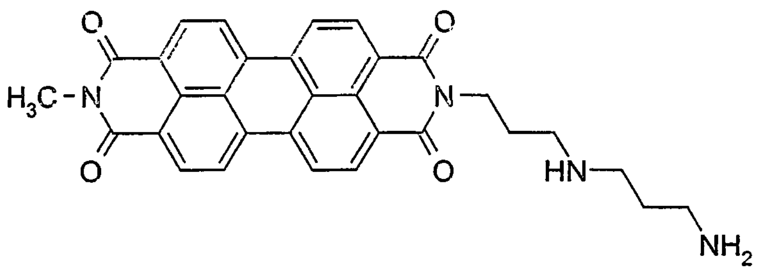

(Va)

hergestellt gemäß US-A-6 221 150 Beispiel 2, eingesetzt werden.

Beispiel 5

Beispiel 1 wurde durchgeführt mit dem einzigen Unterschied, dass an Stelle der 8,2 Teile Presskuchen des von P.V.23 abgeleiteten Pigmentdispergators 11,2 Teile Presskuchen 28,5 %ig eines Pigmentdispergators der Formel (Va) aus Beispiel 4 eingesetzt werden.

Ausprüfungen Beispiele 3, 4 und 5

Alle drei Pigmentzubereitungen aus Beispielen 3, 4 und 5 geben im HS-Lack farbstarke und transparente Lackierungen, die Metalliclackierungen sind farbstark und brillant.

## Patentansprüche

1. Verfahren zur Herstellung transparenter Perylimid-Pigmentzubereitungen auf Basis von Perylen-3,4,9,10-tetracarbonsäurediimiden der Formel (XXX)

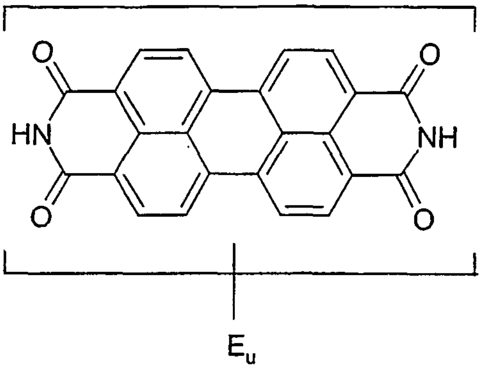

(XXX)

worin

u eine Zahl von 0 bis 8 ist, und wenn u > 0 ist,
E ein Chlor- oder Bromatom und, sofern u > 1 ist, ggf. eine Kombination davon

darstellt, **dadurch gekennzeichnet, dass** man ein Perylimid-Rohpigment der Formel (XXX) in einem flüssigen, wässrigen Medium, in Gegenwart mindestens eines Pigmentdispergators aus der Gruppe der Perylendispergatoren und der von Pigment Violet 23, C.I. 51319 (P.V.23) abgeleiteten Dispergatoren, in einer Rührwerkskugelmühle, die mit einer Leistungsdichte von höchstens 1,0 kW pro Liter betrieben wird, unter der Einwirkung von Mahlkörpern vom Durchmesser gleich oder kleiner als 5 mm und bei einer Temperatur von mindestens 50°C nassvermahlt und die erhaltene Pigmentzubereitung isoliert.

**2.** Verfahren nach Anspruch 1, **dadurch gekennzeichnet, dass** der Perylendispergator eine Verbindung der Formel (II) ist

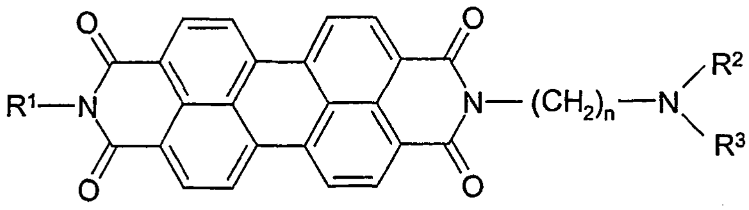

(II)

in welcher

$R^1$ ein Wasserstoffatom, eine Hydroxy- oder Aminogruppe oder eine $C_1$-$C_8$-Alkylgruppe, die durch 1 bis 4 Chlor- oder Bromatome, eine Phenyl-, Cyan-, Hydroxy-, Carbamoyl-, $C_2$-$C_4$-Acyl- oder $C_1$-$C_4$-Alkoxygruppe substituiert sein kann oder perfluoriert oder teilfluoriert ist;
$R^2$ und $R^3$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können;
oder $R^2$ und $R^3$ zusammen mit dem N-Atom einen 5- bis 7-gliedrigen gesättigten, ungesättigten oder aromatischen heterocyclischen Ring bilden, der gegebenenfalls ein weiteres Stickstoff-, Sauerstoff- oder Schwefelatom im Ring enthält; und
n eine Zahl von 1 bis 6 ist.

**3.** Verfahren nach Anspruch 2, **dadurch gekennzeichnet, dass** $R^1$ Wasserstoff, Hydroxyethylen, Methyl oder Ethyl, $R^2$ und $R^3$ jeweils Methyl oder Ethyl darstellen und n die Zahl 3 ist, oder worin $R^2$ und $R^3$ zusammen mit dem angrenzenden Stickstoffatom einen Imidazolylrest oder Morpholinylrest bilden und n die Zahl 3 ist.

4. Verfahren nach Anspruch 1, **dadurch gekennzeichnet, dass** der Perylendispergator eine Verbindung der Formel (III) ist

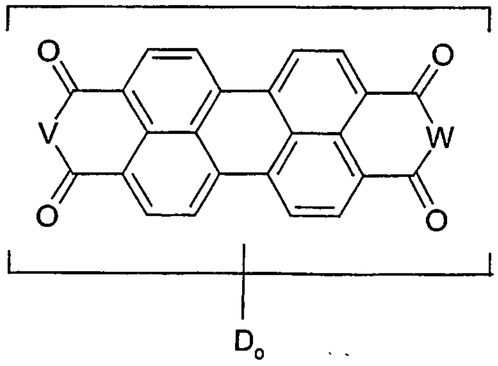

(III)

in welcher

V einen bivalenten Rest -O-, $>NR^4$ oder $>NR^5-Y^- X^+$,
W den bivalenten Rest $>NR^5-Y^- X^+$ bedeutet,
o eine Zahl von 0 bis 8 ist, und wenn o > 0 ist,
D ein Chlor- oder Bromatom und, sofern o > 1 ist, ggf. eine Kombination davon darstellt,
$R^4$ für ein Wasserstoffatom, eine $C_1$-$C_{18}$-Alkylgruppe oder für eine Phenylgruppe steht, die unsubstituiert oder durch Halogen, $C_1$-$C_4$-Alkyl, $C_1$-$C_4$-Alkoxy oder Phenylazo ein- oder mehrfach substituiert sein kann,
$R^5$ für eine $C_1$-$C_{18}$-Alkylengruppe steht, die innerhalb der C-C-Kette durch ein Brückenglied aus der Reihe -O-, $-NR^6-$, -S-, Phenylen, -CO-, $-SO_2-$ oder $-CR^7R^8-$ oder eine chemisch sinnvolle Kombination davon ein- oder mehrfach unterbrochen sein kann und in dem die Reste $R^6$, $R^7$ und $R^8$ unabhängig voneinander jeweils ein Wasserstoffatom oder eine $C_1$-$C_4$-Alkylgruppe sind, die unsubstituiert oder durch einen heterocyclischen Rest substituiert sein kann;
oder $R^5$ für eine Phenylengruppe steht, die unsubstituiert oder durch $C_1$-$C_4$-Alkyl oder $C_1$-$C_4$-Alkoxy ein- oder mehrfach substituiert sein kann,
$Y^-$ einen der anionischen Reste $-SO_3^-$ oder $-COO^-$ bedeutet, und
$X^+$ die Bedeutung $H^+$ oder das Äquivalent

$$\frac{M^{m+}}{m}$$

eines Metallkations aus der 1. bis 5. Hauptgruppe oder aus der 1, oder 2. oder der 4. bis 8. Nebengruppe des Periodensystems der chemischen Elemente hat, wobei m eine der Zahlen 1, 2 oder 3 ist, oder $M^{m+}$ ein Ammoniumion $N^+R^9R^{10}R^{11}R^{12}$ definiert, wobei die Substituenten $R^9$, $R^{10}$, $R^{11}$ und $R^{12}$ unabhängig voneinander jeweils ein Wasserstoffatom oder eine Gruppe aus der Reihe $C_1$-$C_{30}$-Alkyl, $C_2$-$C_{30}$-Alkenyl, $C_5$-$C_{30}$-Cycloalkyl, unsubstituiertes oder durch $C_1$-$C_8$-alkyliertes Phenyl, $(C_1$-$C_4)$-Alkylen-phenyl, vorzugsweise Benzyl, oder eine (Poly)alkylenoxygruppe

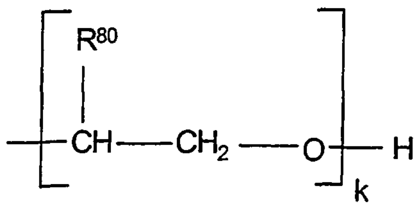

sind,

in der k eine Zahl von 1 bis 30 ist,
$R^{80}$ und für Wasserstoff, $C_1$-$C_4$-Alkyl oder, sofern k > 1 ist, eine Kombination davon steht;
und worin als $R^9$, $R^{10}$, $R^{11}$ und $R^{12}$ ausgewiesenes Alkyl, Alkenyl, Cycloalkyl, Phenyl oder Alkylphenyl durch Amino, Hydroxy und/oder Carboxy substituiert sein können;
oder wobei die Substituenten $R^9$ und $R^{10}$ zusammen mit dem quartären N-Atom ein fünf- bis siebengliedriges gesättigtes Ringsystem, das ggf. noch weitere Heteroatome aus der Gruppe O, S und N enthält, bilden können;
oder wobei die Substituenten $R^9$, $R^{10}$ und $R^{11}$ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können.

**5.** Verfahren nach Anspruch 1, **dadurch gekennzeichnet, dass** der Perylendispergator eine Verbindung Formel (IV) ist,

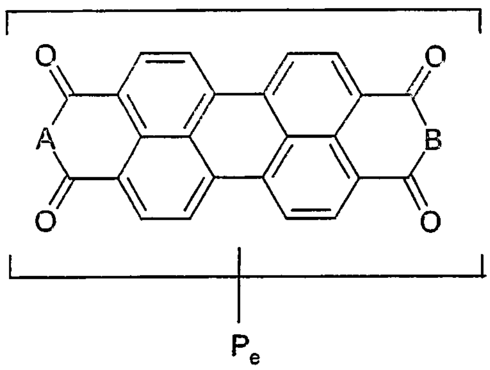

(IV)

in welcher

A einen kationischen bivalenten Rest der Formel N-$R^{13}$-$NH^+R^{14}R^{15}$
B einen anionischen bivalenten Rest der Formel

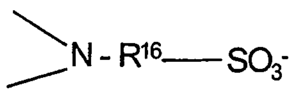

oder

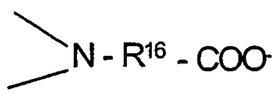

bedeutet,

e eine Zahl von 0 bis 8 ist, und wenn e > 0 ist,
P ein Chlor- oder Bromatom und, sofern e > 1 ist, ggf. eine Kombination davon darstellt,
$R^{13}$ für eine $C_1$-$C_{12}$-Alkylengruppe, eine ($C_6$-$C_{10}$)-Aryl-($C_1$-$C_6$)-alkylengruppe oder eine ($C_6$-$C_{10}$)-Arylengruppe steht,
$R^{14}$ und $R^{15}$ gleich oder verschieden sind und ein Wasserstoffatom, $C_1$-$C_{20}$-Alkyl, oder $C_2$-$C_{20}$-Alkenyl bedeuten, oder
$R^{14}$ und $R^{15}$ zusammen mit dem angrenzenden N-Atom ein heterocyclisches Ringsystem bilden, das ggf. noch weitere ringangehörige Heteroatome N, S und/oder O enthält und an das ggf. zusätzliche Ringe ankondensiert sind, und
$R^{16}$ eine geradkettige oder verzweigte $C_1$-$C_{12}$-Alkylengruppe darstellt.

**6.** Verfahren nach Anspruch 5, **dadurch gekennzeichnet, dass**

e die Zahl 0 ist,
$R^{13}$ eine Ethylen- oder Propylengruppe ist,

$R^{14}$ und $R^{15}$ verschieden oder vorzugsweise gleich sind und einen Ethyl-, Propyl- oder Butylrest bedeuten, oder $R^{14}$ und $R^{15}$ zusammen mit dem angrenzenden N-Atom einen Pyrrolidin-, Piperazin-, Piperidin-, Pyrrol-, Imidazolin-, Imidazol- oder Morpholinring bilden, oder ein Indol-, Indolin- oder Benzimidazol-Ringsystem, das durch Methyl, Ethyl oder Chlor substituiert sein kann, bilden; und
$R^{16}$ eine Ethylen- oder Propylengruppe ist.

**7.** Verfahren nach Anspruch 1, **dadurch gekennzeichnet, dass** der Perylendispergator eine Verbindung Formel (V) ist,

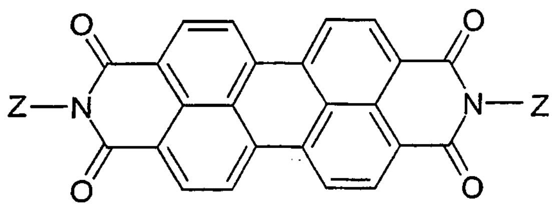

(V)

in welcher die beiden Reste Z gleich oder verschieden sind und Z die Bedeutung $Z^1$, $Z^3$ oder $Z^4$ hat, mit der Maßgabe, dass beide Reste Z nicht gleichzeitig $Z^4$ sind, wobei

$Z^1$ ein Rest der Formel (Va) ist,

$$-[X-Y]q-[X^1-Y^1]_r-[X^2-NH]_sH \qquad (Va)$$

worin

X, $X^1$ und $X^2$ gleich oder verschieden sind und einen verzweigten oder unverzweigten $C_2$-$C_6$-Alkylenrest oder einen $C_5$-$C_7$-Cycloalkylenrest bedeuten, der durch 1 bis 4 $C_1$-$C_4$-Alkylreste, Hydroxyreste, Hydroxyalkylreste mit 1 bis 4 Kohlenstoffatomen und/oder durch 1 bis 2 weitere $C_5$-$C_7$-Cycloalkylreste substituiert sein kann;
Y und $Y^1$ gleich oder verschieden sind und eine NH-, -O-, N($C_1$-$C_6$-alkyl)-Gruppe, oder

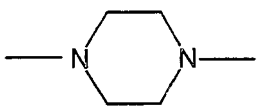

bedeuten;
q eine Zahl von 1 bis 6;
r und s unabhängig voneinander eine Zahl von 0 bis 6, wobei r und s vorzugsweise nicht gleichzeitig Null sind;
$Z^3$ ein Rest der Formel (Vc) ist,

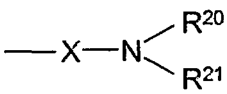

(Vc)

worin

$R^{20}$ und $R^{21}$ unabhängig voneinander ein Wasserstoffatom, eine substituierte oder unsubstituierte, oder teil- oder perfluorierte Alkylgruppe mit 1 bis 20 Kohlenstoffatomen, oder eine substituierte oder unsubstituierte, oder teil- oder perfluorierte Alkenylgruppe mit 2 bis 20 Kohlenstoffatomen darstellen, wobei die Substituenten Hydroxy, Phenyl, Cyano, Chlor, Brom, $C_2$-$C_4$-Acyl oder $C_1$-$C_4$-Alkoxy sein können, oder
$R^{20}$ und $R^{21}$ zusammen mit dem N-Atom einen gesättigten, ungesättigten oder aromatischen heterocyclischen

5- bis 7-gliedrigen Ring bilden, der gegebenenfalls ein weiteres Stickstoff-, Sauerstoff- oder Schwefelatom im Ring enthält; und
X die oben genannte Bedeutung hat;

und worin

$Z^4$ Wasserstoff, Hydroxy, Amino, Phenyl oder $C_1$-$C_{20}$-Alkyl ist, wobei der Phenylring und die Alkylgruppe durch ein oder mehrere Substituenten aus der Gruppe Cl, Br, CN, OH, $C_6H_5$, Carbamoyl, $C_2$-$C_4$-Acyl und $C_1$-$C_4$-Alkoxy substituiert sein können, der Phenylring auch durch $NR^{20}R^{21}$ substituiert sein kann, wobei $R^{20}$ und $R^{21}$ die oben genannte Bedeutung haben, oder die Alkylgruppe perfluoriert oder teilfluoriert ist.

**8.** Verfahren nach Anspruch 1, **dadurch gekennzeichnet, dass** der von P.V. 23 abgeleitete Dispergator eine Verbindung der Formel (I) ist

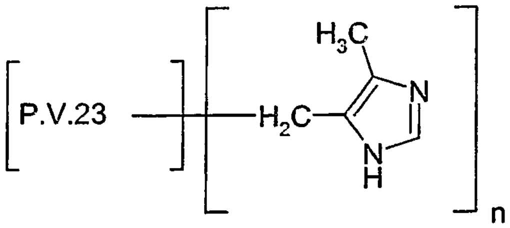

(I)

worin

n eine Zahl von 1 bis 4 ist.

**9.** Verfahren nach einem oder mehreren der Ansprüche 1 bis 8, **dadurch gekennzeichnet, dass** der Pigmentdispergator in einer Menge von 0,1 bis 25 Gew.-%, bezogen auf das Rohpigment, eingesetzt wird.

**10.** Verfahren nach einem oder mehreren der Ansprüche 1 bis 9, **dadurch gekennzeichnet, dass** das wässrige Medium 0 bis zu 10 Gew.-% eines organischen Lösemittels, bezogen auf das Wasser, enthält.

**11.** Verfahren nach einem oder mehreren der Ansprüche 1 bis 10, **dadurch gekennzeichnet, dass** der pH-Wert des wässrigen Mediums gleich oder größer als 9 ist.

**12.** Verfahren nach einem oder mehreren der Ansprüche 1 bis 11, **dadurch gekennzeichnet, dass** die Mahldauer zwischen 10 Minuten und 5 Stunden beträgt.

**13.** Verfahren nach einem oder mehreren der Ansprüche 1 bis 12, **dadurch gekennzeichnet, dass** die Mahlung bei einer Temperatur zwischen 60 und 95°C durchgeführt wird.

## Claims

**1.** A process for preparing transparent perylimide pigment preparations based on perylene-3,4,9,10-tetracarboxylic diimides of the formula (XXX)

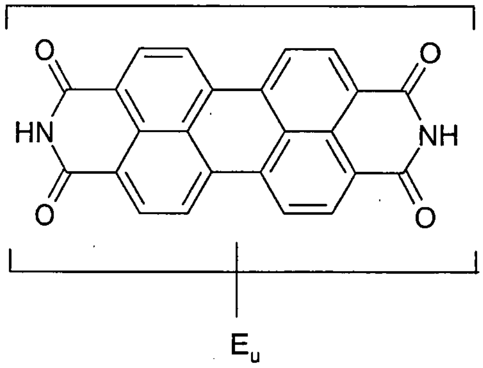

(XXX)

in which

u is a number from 0 to 8 and, if u > 0,
E is a chlorine or bromine atom and, where u > 1, may be a combination thereof, **characterized in that** a crude perylimide pigment of the formula (XXX) is wet-ground in a liquid, aqueous medium, in the presence of at least one pigment dispersant from the group of perylene dispersants and dispersants derived from Pigment Violet 23, C. I. 51319, in a stirred ballmill operated with a power density of not more than 1.0 kW per liter of milling space, under the action of grinding media having a diameter of less than or equal to 5 mm and at a temperature of at least 50°C, and isolating the resulting pigment preparation.

**2.** The process of claim 1, **characterized in that** the perylene dispersant is a compound of the formula (II)

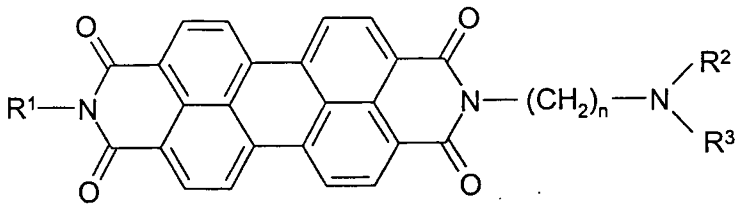

(II)

in which

$R^1$ is a hydrogen atom, a hydroxyl or amino group or a $C_1$-$C_8$-alkyl group which may be substituted by from 1 to 4 chlorine or bromine atoms or by a phenyl, cyano, hydroxyl, carbamoyl, $C_2$-$C_4$-acyl or $C_1$-$C_4$-alkoxy group or is perfluorinated or partly fluorinated;
$R^2$ and $R^3$ independently of one another are a hydrogen atom, a substituted or unsubstituted or partly fluorinated or perfluorinated alkyl group of 1 to 20 carbon atoms, or a substituted or unsubstituted or partly fluorinated or perfluorinated alkenyl group of 2 to 20 carbon atoms, it being possible for the substituents to be hydroxyl, phenyl, cyano, chlorine, bromine, $C_2$-$C_4$-acyl or $C_1$-$C_4$-alkoxy;
or $R^2$ and $R^3$ together with the nitrogen atom form a 5- to 7-membered saturated, unsaturated or aromatic heterocyclic ring which if desired contains a further nitrogen, oxygen or sulfur atom in the ring; and
n is a number from 1 to 6.

**3.** The process of claim 2, **characterized in that** $R^1$ is hydrogen, hydroxyethylene, methyl or ethyl, $R^2$ and $R^3$ are each methyl or ethyl and n is the number 3, or in which $R^2$ and $R^3$ together with the adjacent nitrogen atom form an imidazolyl radical or morpholinyl radical and n is the number 3.

**4.** The process of claim 1, **characterized in that** the perylene dispersant is a compound of the formula (III)

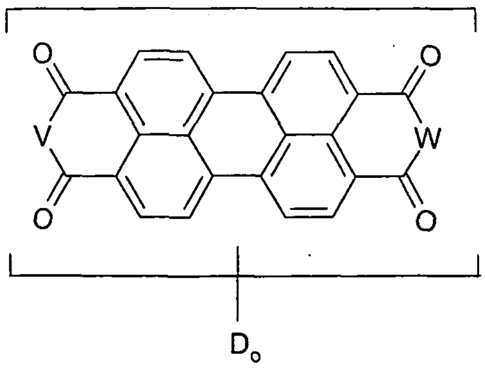

(III)

in which

V is a bivalent radical -O-, $>NR^4$ or $>NR^5\text{-}Y^- X^+$,
W is the bivalent radical $>NR^5\text{-}Y^- X^+$,
o is a number from 0 to 8 and, if o > 0,
D is a chlorine or bromine atom and, where o > 1, may be a combination thereof,
$R^4$ is a hydrogen atom or a $C_1$-$C_{18}$-alkyl group or is a phenyl group which may be unsubstituted or substituted one or more times by halogen, $C_1$-$C_4$-alkyl, $C_1$-$C_4$-alkoxy or phenylazo,
$R^5$ is a $C_1$-$C_{18}$-alkylene group which within the C-C chain may be interrupted one or more times by a bridging link from the series -O-, $-NR^6$-, -S-, phenylene, -CO-, $-SO_2$- or $-CR^7R^8$- or by a chemically rational combination thereof and in which the radicals $R^6$, $R^7$ and $R^8$ independently of one another are each a hydrogen atom or a $C_1$-$C_4$-alkyl group which may be unsubstituted or substituted by a heterocyclic radical;
or $R^5$ is a phenylene group which may be unsubstituted or substituted one or more times by $C_1$-$C_4$-alkyl or $C_1$-$C_4$-alkoxy,
Y is one of the anionic radicals $-SO_3^-$ or $-COO^-$, and
$X^+$ has the definition $H^+$ or the equivalent

$$\frac{M^{m+}}{m}$$

of a metal cation from main groups 1 to 5 or transition groups 1 or 2 or 4 to 8 of the Periodic Table of the Elements, m being one of the numbers 1, 2 or 3,
or $M^{m+}$ defines an ammonium ion $N^+R^9R^{10}R^{11}R^{12}$, where the substituents $R^9$, $R^{10}$, $R^{11}$ and $R^{12}$ independently of one another are each a hydrogen atom or a group from the series $C_1$-$C_{30}$-alkyl, $C_2$-$C_{30}$-alkenyl, $C_5$-$C_{30}$-cycloalkyl, unsubstituted or $C_1$-$C_8$-alkylated phenyl, $(C_1$-$C_4)$-alkylene-phenyl, preferably benzyl, or a (poly) alkylenoxy group

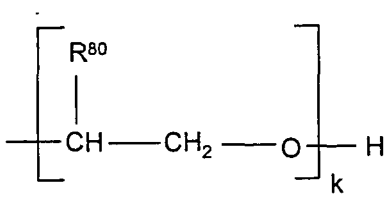

in which k is a number from 1 to 30,
$R^{80}$ is hydrogen, $C_1$-$C_4$-alkyl or, if k is >1, a combination thereof;
and in which $R^9$, $R^{10}$, $R^{11}$ and $R^{12}$ identified as alkyl, alkenyl, cycloalkyl, phenyl or alkylphenyl may be substituted by amino, hydroxyl and/or carboxyl;
or where the substituents $R^9$ and $R^{10}$ together with the quaternary nitrogen atom may form a five- to seven-membered saturated ring system which if desired contains further heteroatoms from the group O, S and N;

or where the substituents $R^9$, $R^{10}$ and $R^{11}$ together with the quaternary nitrogen atom may form a five- to seven-membered aromatic ring system which if desired contains further heteroatoms from the group O, S and N and to which, if desired, additional rings are fused on.

5. The process of claim 1, **characterized in that** the perylene dispersant is a compound of formula (IV)

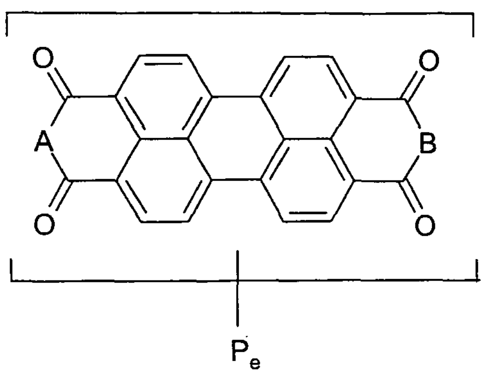

(IV)

in which

A is a cationic bivalent radical of the formula $N-R^{13}-NH^+R^{14}R^{15}$,
B is an anionic bivalent radical of the formula

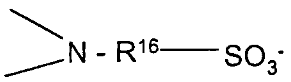

or

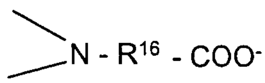

e is a number from 0 to 8, and, if e is > 0,
P is a chlorine or bromine atom and, where e is > 1, may be a combination thereof,
$R^{13}$ is a $C_1$-$C_{12}$-alkylene group, a $(C_6$-$C_{10})$-aryl-$(C_1$-$C_6)$-alkylene group or a $(C_6$-$C_{10})$-arylene group,
$R^{14}$ and $R^{15}$ are identical or different and are a hydrogen atom, $C_1$-$C_{20}$-alkyl or $C_2$-$C_{20}$-alkenyl, or
$R^{14}$ and $R^{15}$ together with the adjacent nitrogen atom form a heterocyclic ring system which if desired contains further heteroatom ring members N, S and/or O and to which, if desired, additional rings are fused on, and
$R^{16}$ is a straight-chain or branched $C_1$-$C_{12}$-alkylene group.

6. The process of claim 5, **characterized in that**

e is 0,
$R^{13}$ is an ethylene or propylene group,
$R^{14}$ and $R^{15}$ are different or, preferably, identical and are an ethyl, propyl or butyl radical, or
$R^{14}$ and $R^{15}$ together with the adjacent nitrogen atom form a pyrrolidine, piperazine, piperidine, pyrrole, imidazoline, imidazole, or morpholine ring, or form an indole, indoline or benzimidazole ring system which may be substituted by methyl, ethyl or chlorine; and
$R^{16}$ is an ethylene or propylene group.

7. The process of claim 1, **characterized in that** the perylene dispersant is a compound of formula (V)

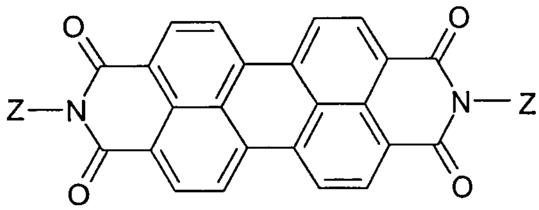

(V)

in which the two radicals Z are identical or different and Z has the definition $Z^1$, $Z^3$ or $Z^4$, with the proviso that both radicals Z are not simultaneously $Z^4$, where

$Z^1$ is a radical of the formula (Va)

$$-[X-Y]_q-[X^1-Y^1]_r-[X^2-NH]_sH \quad \text{(Va)}$$

in which

X, $X^1$ and $X^2$ are identical or different and are a branched or unbranched $C_2$-$C_6$-alkylene radical or a $C_5$-$C_7$-cycloalkylene radical which may be substituted by from 1 to 4 $C_1$-$C_4$-alkyl radicals, hydroxyl radicals, hydroxyalkyl radicals of 1 to 4 carbon atoms, and/or by 1 or 2 further $C_5$-$C_7$-cycloalkyl radicals;
Y and $Y^1$ are identical or different and are an NH-, -O-, N($C_1$-$C_6$-alkyl) group,

or

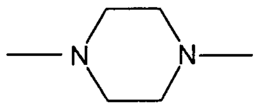

;

q is a number from 1 to 6;
r and s independently of one another are a number from 0 to 6, r and s preferably not simultaneously being zero;
$Z^3$ is a radical of the formula (Vc)

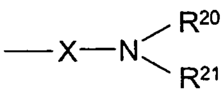

(Vc)

in which

$R^{20}$ and $R^{21}$ independently of one another are a hydrogen atom, a substituted or unsubstituted or partly fluorinated or perfluorinated alkyl group of 1 to 20 carbon atoms, or a substituted or unsubstituted or partly fluorinated or perfluorinated alkenyl group of 2 to 20 carbon atoms, it being possible for the substituents to be hydroxyl, phenyl, cyano, chlorine, bromine, $C_2$-$C_4$-acyl or $C_1$-$C_4$-alkoxy, or
$R^{20}$ and $R^{21}$ together with the nitrogen atom form a saturated, unsaturated or aromatic heterocyclic 5- to 7-membered ring which if desired contains a further nitrogen, oxygen or sulfur atom in the ring; and
X is as defined above;

and in which

$Z^4$ is hydrogen, hydroxyl, amino, phenyl or $C_1$-$C_{20}$-alkyl, it being possible for the phenyl ring and the alkyl group to be substituted by one or more substituents from the group consisting of Cl, Br, CN, OH, $C_6H_5$, carbamoyl,

$C_2$-$C_4$-acyl and $C_1$-$C_4$-alkoxy, and the phenyl ring may also be substituted by $NR^{20}R^{21}$, $R^{20}$ and $R^{21}$ being as defined above, or the alkyl group is perfluorinated or partly fluorinated.

**8.** The process of claim 1, **characterized in that** the dispersant derived from P.V.23 as a compound of the formula (I)

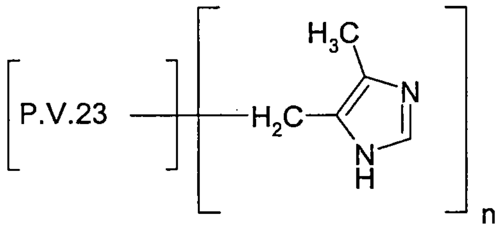

(I)

in which

n is a number from 1 to 4.

**9.** The process of one or more of claims 1 to 8, **characterized in that** the pigment dispersant is used in an amount of 0.1 % to 25% by weight, based on the crude pigment.

**10.** The process of one or more of claims 1 to 9, **characterized in that** the aqueous medium contains 0 up to 10% by weight of an organic solvent, based on the water.

**11.** The process of one or more of claims 1 to 10, **characterized in that** the pH of the aqueous medium is greater than or equal to 9.

**12.** The process of one or more of claims 1 to 11, **characterized in that** the milling duration is between 10 minutes and 5 hours.

**13.** The process of one or more of claims 1 to 12, **characterized in that** the milling is carried out at a temperature between 60 and 95°C.

**Revendications**

**1.** Procédé de fabrication de préparations pigmentaires transparentes à base de pérylimide, à base de pérylène-3,4,9,10-tétracarboxodiimides de formule (XXX)

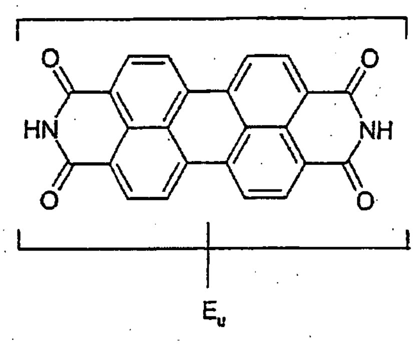

(XXX)

dans laquelle

u est un nombre de 0 à 8, et, quand u > 0,
E est un atome de chlore ou de brome et, si u > 1, en représente éventuellement une combinaison, **caractérisé**

**en ce qu'** on broie dans des conditions humides un pigment brut de pérylimide de formule (XXX) dans un milieu aqueux liquide, en présence d'au moins un dispersant pigmentaire choisi dans le groupe constitué par les dispersants de pérylène et les dispersants qui dérivent du pigment violet 23, C.I. 51319 (P.V.23), dans un broyeur à billes muni d'un agitateur fonctionnant avec une densité de puissance d'au plus 1,0 kW par litre, sous l'action d'éléments broyeurs ayant un diamètre supérieur ou égal à 5 mm et à une température d'au moins 50°C, et on isole la préparation pigmentaire obtenue.

**2.** Procédé selon la revendication 1, **caractérisé en ce que** le dispersant de pérylène est un composé de formule (II)

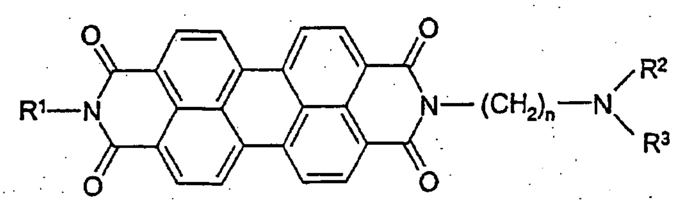

(II)

dans laquelle

$R^1$ est un atome d'hydrogène, un groupe hydroxy ou amino ou un groupe alkyle en $C_1$-$C_8$, qui peut être substitué par 1 à 4 atomes de chlore ou de brome, un groupe phényle, cyano, hydroxy, carbamoyle, acyle en $C_2$-$C_4$ ou alcoxy en $C_1$-$C_4$, ou bien est perfluoré ou partiellement fluoré ;
$R^2$ et $R^3$ représentent chacun indépendamment de l'autre un atome d'hydrogène, un groupe alkyle substitué ou non substitué, ou partiellement fluoré ou perfluoré et ayant 1 à 20 atomes de carbone, ou un groupe alcényle substitué ou non substitué, ou partiellement fluoré ou perfluoré et ayant 2 à 20 atomes de carbone, les substituants pouvant être des groupes hydroxy, phényle, cyano, chloro, bromo, acyle en $C_2$-$C_4$ ou alcoxy en $C_1$-$C_4$; ou bien $R^2$ et $R^3$, avec l'atome d'azote, forment un chaînon hétérocyclique saturé, insaturé ou aromatique à 5 à 7 chaînons, qui éventuellement contient dans le noyau un atome supplémentaire d'azote, d'oxygène ou de soufre ; et
n est un nombre de 1 à 6.

**3.** Procédé selon la revendication 2, **caractérisé en ce que** $R^1$ est un atome d'hydrogène, un groupe hydroxy-éthylène, méthyle ou éthyle, $R^2$ et $R^3$ représentent chacun le groupe méthyle ou éthyle, et n est le nombre 3, ou bien $R^2$ et $R^3$, avec l'atome d'azote qui leur est voisin, forment un radical imidazolyle ou morpholinyle, et n est le nombre 3.

**4.** Procédé selon la revendication 1, **caractérisé en ce que** le dispersant de pérylène est un composé de formule (III)

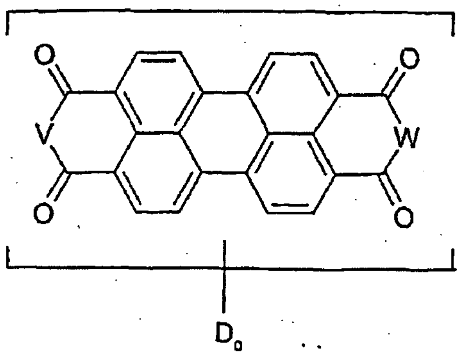

(III)

dans laquelle

V est un radical divalent -O-, $>NR^4$ ou $>NR^5$-$Y^-X^+$,
W est le radical divalent $>NR^5$-$Y^-X^+$,
o est un nombre de 0 à 8, et, quand o > 0,
D est un atome de chlore ou de brome, et, si o > 1, en représente éventuellement une combinaison,

$R^4$ est un atome d'hydrogène, un groupe alkyle en $C_1$-$C_{18}$ ou un groupe phényle, qui peut être non substitué ou une ou plusieurs fois substitué par des substituants halogéno, alkyle en $C_1$-$C_4$, alcoxy en $C_1$-$C_4$ ou phénylazo, $R^5$ est un groupe alkylène en $C_1$-$C_{18}$, qui à l'intérieur de la chaîne C-C peut être interrompu une ou plusieurs fois par un chaînon pontant de la série -O-, -$NR^6$-, -S-, phénylène, -CO-, -$SO_2$- ou -$CR^7R^8$- ou une combinaison chimique raisonnable de ces derniers, et où les radicaux $R^6$, $R^7$ et $R^8$ représentent chacun indépendamment des autres un atome d'hydrogène ou un groupe alkyle en $C_1$-$C_4$, qui peut être non substitué, ou substitué par un radical hétérocyclique ;

ou bien $R^5$ est un groupe phénylène, qui peut être non substitué, ou être une ou plusieurs fois substitué par des substituants alkyle en $C_1$-$C_4$ ou alcoxy en $C_1$-$C_4$,

$Y^-$ est l'un des radicaux anioniques -$SO_3^-$ ou -$COO^-$, et

$X^+$ représente $H^+$ ou l'équivalent $M^{m+}/m$ d'un cation métallique du 1er au 5ème groupe principal, ou du 1er ou du 2ème, ou du 4ème au 8ème groupe secondaire du Tableau Périodique des Eléments Chimiques, m étant l'un des nombres 1, 2 ou 3, ou bien $M^{m+}$ définit un anion ammonium $N^+R^9R^{10}R^{11}R^{12}$ dans lequel les substituants $R^9$, $R^{10}$, $R^{11}$ et $R^{12}$ représentent chacun indépendamment des autres un atome d'hydrogène ou un groupe de la série alkyle en $C_1$-$C_{30}$, alcényle en $C_2$-$C_{30}$, cycloalkyle en $C_5$-$C_{30}$, phényle non substitué ou à substitution alkyle en $C_1$-$C_8$, (alkylène en $C_1$-$C_4$)phényle, de préférence benzyle, ou un groupe (poly)alkylène-oxy

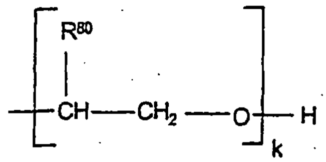

où k est un nombre de 1 à 30,

$R^{80}$ est un atome d'hydrogène, un groupe alkyle en $C_1$-$C_4$ ou bien, si k> 1, en est une combinaison ;

et où les radicaux alkyle, alcényle, cycloalkyle, phényle ou alkylphényle représentés par $R^9$, $R^{10}$, $R^{11}$ et $R^{12}$ peuvent être substitués par des substituants amino, hydroxy et/ou carboxy,

ou bien où les substituants $R^9$ et $R^{10}$, avec l'atome d'azote quaternaire, peuvent former un système cyclique saturé à 5 à 7 chaînons, qui éventuellement encore contient d'autres hétéroatomes du groupe constitué par O, S et N ;

ou bien où les substituants $R^9$, $R^{10}$ et $R^{11}$, avec l'atome d'azote quaternaire, peuvent former un système cyclique aromatique à 5 à 7 chaînons, qui éventuellement contient encore d'autres hétéroatomes du groupe constitué par O, S et N, et auxquels sont condensés d'éventuels noyaux supplémentaires.

5. Procédé selon la revendication 1, **caractérisé en ce que** le dispersant de pérylène est un composé de formule (IV)

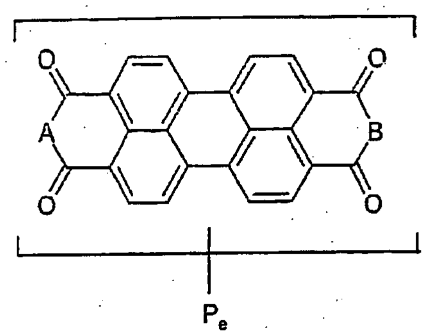

(IV)

dans laquelle

A est un radical divalent cationique de formule N-$R^{13}$-$NH^+R^{14}R^{15}$,

B est un radical divalent anionique de formule >N-$R^{16}$-$SO_3$ ou >N-$R^{16}$-COO-,

e est un nombre de 0 à 8, et, quand e > 0,

P est un atome de chlore ou de brome et, si e > 1, en représente éventuellement une combinaison,

$R^{13}$ est un groupe alkylène en $C_1$-$C_{12}$, un groupe (aryle en $C_6$-$C_{10}$) (alkylène en $C_1$-$C_6$) ou un groupe arylène en $C_6$-$C_{10}$,

$R^{14}$ et $R^{15}$ sont identiques ou différents et représentent chacun un atome d'hydrogène, un groupe alkyle en $C_1$-$C_{20}$ ou alcényle en $C_2$-$C_{20}$, ou bien
$R^{14}$ et $R^{15}$, avec l'atome d'azote qui leur est voisin, forment un système cyclique hétérocyclique, qui éventuellement encore contient d'autres hétéroatomes nucléaires N, S et/ou O, et auxquels sont condensés éventuellement des cycles supplémentaires, et
$R^{16}$ est un groupe alkylène en $C_1$-$C_{12}$ à chaîne droite ou ramifiée.

**6.** Procédé selon la revendication 5, **caractérisé en ce que**

e est le nombre 0,
$R^{13}$ est un groupe éthylène ou propylène,
$R^{14}$ et $R^{15}$ sont identiques ou différents et représentent chacun un radical éthyle, propyle ou butyle, ou bien
$R^{14}$ et $R^{15}$, avec l'atome d'azote qui leur est voisin, forment un système cyclique pyrrolidine, pipérazine, pipéridine, pyrrole, imidazoline, imidazole ou morpholine, ou forment un système cyclique indole, indoline ou benzimidazole pouvant être substitué par des substituants méthyle, éthyle ou chloro ; et
$R^{16}$ est un groupe éthylène ou propylène.

**7.** Procédé selon la revendication 1, **caractérisé en ce que** le dispersant de pérylène est un composé de formule (V)

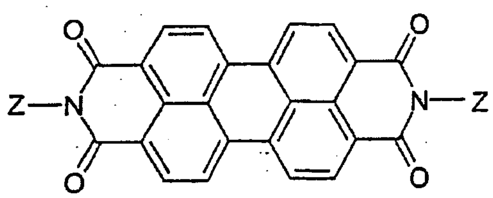

(V)

dans laquelle les deux radicaux Z sont identiques ou différents, et Z a pour signification $Z^1$, $Z^3$ ou $Z^4$, à la condition que les deux radicaux Z ne soient pas simultanément $Z^4$, où

$Z^1$ est un radical de formule (Va)

$$-[X- Y]_q- [X^1 - Y^1]_r-[X^2 -NH]_sH \qquad (Va)$$

où
X, $X^1$ et $X^2$ sont identiques ou différents et représentent chacun un radical alkylène en $C_2$-$C_6$ à chaîne droite ou ramifiée ou un radical cycloalkylène en $C_5$-$C_7$, qui peut être substitué par 1 à 4 radicaux alkyle en $C_1$-$C_4$, radicaux hydroxy, radicaux hydroxyalkyle ayant 1 à 4 atomes de carbone et/ou par 1 à 2 autres radicaux cycloalkyle en $C_5$-$C_7$ ;
Y et $Y^1$ sont identiques ou différents et représentent chacun un groupe NH-, -O-, N(alkyle en $C_1$-$C_6$)- ou bien

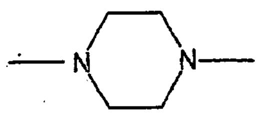

q est un nombre de 1 à 6 ;
r et s représentent chacun indépendamment de l'autre un nombre de 0 à 6, r et s n'étant de préférence pas simultanément égaux à zéro ;
$Z^3$ est un radical de formule (Vc)

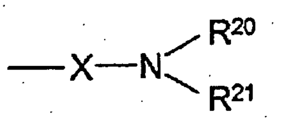

(Vc)

dans laquelle

$R^{20}$ et $R^{21}$ représentent chacun indépendamment de l'autre un atome d'hydrogène, un groupe alkyle substitué ou non substitué, ou partiellement fluoré ou perfluoré et ayant 1 à 20 atomes de carbone, ou un groupe alcényle substitué ou non substitué, ou partiellement fluoré ou perfluoré et ayant 2 à 20 atomes de carbone, les substituants pouvant être les groupes hydroxy, phényle, cyano, chloro, bromo, acyle en $C_2$-$C_4$ ou alcoxy en $C_1$-$C_4$, ou bien
$R^{20}$ et $R^{21}$, avec l'atome d'azote, forment un noyau hétérocyclique à 5 à 7 chaînons, saturé, insaturé ou aromatique, qui éventuellement contient dans le noyau un autre atome d'azote, d'oxygène ou de soufre ; et
X a les significations données ci-dessus ;
et où
$Z^4$ est un atome d'hydrogène, un groupe hydroxy, amino, phényle ou alkyle en $C_1$-$C_{20}$, le noyau phényle et le groupe alkyle pouvant être substitués par un ou plusieurs substituants du groupe constitué par les groupes Cl, Br, CN, OH, $C_6H_5$, carbamoyle, acyle en $C_2$-$C_4$ et alcoxy en $C_1$-$C_4$, le noyau phényle pouvant aussi être substitué par $NR^{20}R^{21}$ où $R^{20}$ et $R^{21}$ ont les significations données ci-dessus, ou bien le groupe alkyle étant perfluoré ou partiellement fluoré.

**8.** Procédé selon la revendication 1, **caractérisé en ce que** le dispersant qui dérive du P.V.23 est un composé de formule (I)

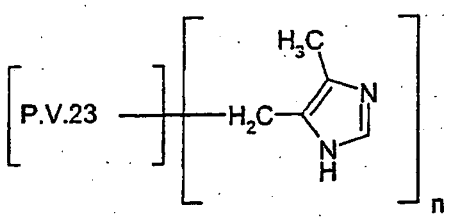

(I)

dans laquelle n est un nombre de 1 à 4.

**9.** Procédé selon l'une ou plusieurs des revendications 1 à 8, **caractérisé en ce que** le dispersant pigmentaire est utilisé en une quantité de 0,1 à 25 % en poids par rapport au pigment brut.

**10.** Procédé selon l'une ou plusieurs des revendications 1 à 9, **caractérisé en ce que** le milieu aqueux contient 0 à 10 % en poids d'un solvant organique, par rapport à l'eau.

**11.** Procédé selon l'une ou plusieurs des revendications 1 à 10, **caractérisé en ce que** le pH du milieu aqueux est supérieur ou égal à 9.

**12.** Procédé selon l'une ou plusieurs des revendications 1 à 11, **caractérisé en ce que** la durée du broyage est comprise entre 10 minutes et 5 heures.

**13.** Procédé selon l'une ou plusieurs des revendications 1 à 12, **caractérisé en ce que** le broyage est réalisé à une température de 60 à 95°C.